# EUROPEAN PATENT APPLICATION

(11) **EP 4 464 443 A1**
(43) Date of publication of application: **20.11.2024**
(21) Application number: 22920357.5
(22) Date of filing: 10.05.2022
(51) Int. Cl.: B23C 3/12, B23C 5/10

(54) **DEBURRING TOOL AND DEBURRING METHOD**

(30) Priority: 14.01.2022 JP 2022004223
(71) Applicant: Xebec Technology Co., Ltd., Tokyo 102-0083 (JP)
(72) Inventor: SATO, Koji, Tokyo 102-0083 (JP)
(74) Representative: Plougmann Vingtoft a/s
(86) International application number: PCT/JP2022/019800
(87) International publication number: WO 2023/135832

(57) **Abstract**

A shaft (2) of a deburring tool (1) has a distal end surface (5) orthogonal to its axis L, an annular connecting surface (6) extending in an X2 direction from an outer peripheral end of the distal end surface (5) toward an outer peripheral side, and an annular outer peripheral surface (7) extending parallel to the axis L from an end in the X2 direction of the connecting surface (6). The shaft (2) also has notches (8) at four locations in a circumferential direction. Each of the notches opens to the distal end surface (5), the connecting surface (6), and the outer peripheral surface (7). Each of the notches (8) has an inner wall surface (10) having a pair of opposed surface portions (11) and (12) opposed to each other in the circumferential direction. Each of the pair of opposed surface portions (11) and (12) extends in a radial direction around the axis L. The edges of the pair of opposed surface portions (11) and (12) are cutting edges (25) .

## Description

### Field

The present invention relates to a deburring tool that removes burrs with a distal end surface in contact with a surface to be deburred of a workpiece.

### Background

A deburring tool is disclosed in Patent Literature 1. The deburring tool in this literature is shaped like a rod and has an outer peripheral surface surrounding an axis, a distal end surface perpendicular to the axis, and a groove with a constant width crossing the center of the distal end surface in a direction orthogonal to the axis. The groove extends parallel to the axis from the distal end surface toward a proximal end side of the deburring tool. A distal end portion of the deburring tool is divided into two blade sections by the groove.

The opening edge of the groove has a distal end edge portion continuous to the distal end surface and an outer peripheral end edge portion continuous to the outer peripheral surface. The distal end edge portion is perpendicular to the axis, and the outer peripheral end edge portion is parallel to the axis. Thus, the distal end edge portion and the outer peripheral end edge portion intersect at the right angle. The distal end edge portion and the outer peripheral end edge portion form a cutting edge of the deburring tool. The inner wall surface of the groove is a rake surface of the cutting edge. When removing burrs, the deburring tool is rotated about the axis, and the distal end surface is brought into contact with a surface to be deburred of a workpiece and moved along the surface to be deburred. Burrs on the edge of the surface to be deburred are sheared by the cutting edge.

### Citation List

### Patent Literature

Patent Literature 1: Japanese Patent Application Laid-open Publication No. 2016-2618

### Summary

### Technical Problem

Helical gear teeth are formed by hobbing or skiving. These cutting processes produce larger burrs than general cutting processes. Here, the larger the burrs, the stronger the root portions of the burrs. Thus, the cutting edge of the deburring tool is put under load when removing burrs formed on the helical gear.

FIGS. 20 and 21 illustrate a deburring operation performed using the deburring tool in Patent Literature 1, as viewed from the distal end surface of the deburring tool. A deburring tool 100 has an outer peripheral surface 101 surrounding an axis L, a distal end surface 102 perpendicular to the axis L, and a groove 103 with a constant width crossing the center of the distal end surface 102. The groove 103 divides a distal end portion of a shaft 101 into two blade sections 104. The opening edge of the groove is a cutting edge 105.

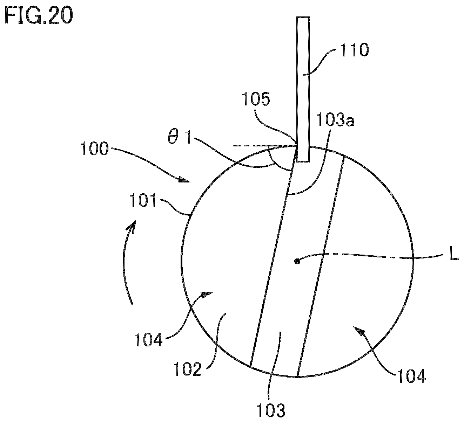

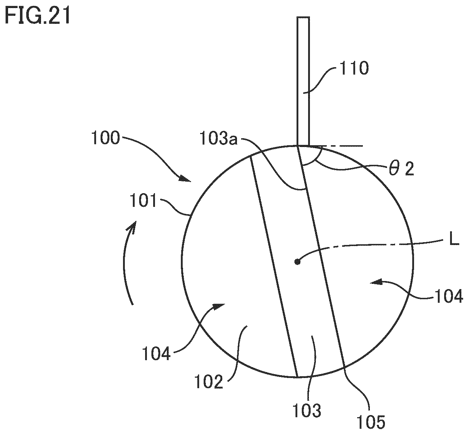

When the deburring tool 100 comes into contact with a burr 110 while rotating, the cutting edge 105 strikes the burr 110 at an acute angle, as illustrated in FIG. 20. In other words, a rake angle θ1 formed by the tangent line passing through the point of contact with the burr 110 in the shaft 101 and a rake surface 103a of the cutting edge 105 is an acute angle. As illustrated in FIG. 21, in the deburring tool 100, the blade section 104 comes into contact with the burr 110 at an acute angle at the point in time when the blade section 104 leaves the burr 110. In other words, an angle θ2 formed by the tangent line passing through the point of contact with the burr 110 in the shaft 101 and an inner wall 103a of the groove 103 extending from the point of contact with the burr 110 is an acute angle. Thus, when the deburring tool 100 is used to remove high-strength burrs such as burr 110 formed on helical gears, chipping is likely to occur on the cutting edge 105 and the blade section 104.

### Solution to Problem

To solve the above problem, a deburring tool of the present invention comprises a shaft. The shaft comprises a distal end surface orthogonal to an axis when visually observed, an annular connecting surface extending to a proximal end side from an outer peripheral end of the distal end surface toward an outer peripheral side, an annular outer peripheral surface extending parallel to the axis from an end on the proximal end side of the connecting surface, and a notch disposed at a portion of the shaft in a circumferential direction around the axis and opening to the distal end surface, the connecting surface, and the outer peripheral surface. The notch has an inner wall surface comprising a pair of opposed surface portions opposed to each other in the circumferential direction. Each of the opposed surface portions extends in a radial direction. Each of the opposed surface portions has an outer peripheral edge having a distal end edge portion continuous to the distal end surface in the circumferential direction, an outer peripheral end edge portion continuous to the outer peripheral surface in the circumferential direction, and a connecting end edge portion continuous to the connecting surface in the circumferential direction and connecting the distal end edge portion and the outer peripheral end edge portion. The distal end edge portion, the outer peripheral end edge portion, and the connecting end edge portion form a cutting edge.

According to the present invention, the notch provided in the shaft has a pair of opposed surface portions opposed to each other in the circumferential direction. The outer peripheral edge of each of the opposed surface portions is a cutting edge. The deburring tool performs deburring with the distal end surface brought into contact with a workpiece while rotating about the axis. Here, when the shaft rotates in a predetermined direction and the outer peripheral edge of one of the opposed surface portions serves as a cutting edge to cut a burr, the rake surface of the cutting edge is the one opposed surface portion. Thus, the rake surface extends in the radial direction. Accordingly, the rake angle when the cutting edge comes into contact with the burr is 90°. On the other hand, at the point in time when the portion of the shaft that has the cutting edge (blade section) leaves the burr, the outer peripheral edge of the other opposed surface portion is in contact with the burr. Here, the other opposed surface portion extends in the radial direction. Thus, the outer peripheral edge of the other opposed surface portion is in contact with the burr at an angle of 90°. Accordingly, even when the deburring tool is used to remove high-strength burrs such as burrs formed on helical gears, chipping of the cutting edge and the blade section can be prevented or suppressed.

The shaft has the annular connecting surface extending to the proximal end side from the outer peripheral end of the distal end surface toward the outer peripheral side between the distal end surface and the outer peripheral surface. Thus, in the cutting edge, which is the outer peripheral edge of each of the opposed surface portions, the connecting end edge portion continuous to the connecting surface in the circumferential direction extends to the proximal end side from the outer peripheral end of the distal end surface toward the outer peripheral side, in conformity with the cross-sectional profile of the connecting surface. In this configuration, the distal end edge portion and the outer peripheral end edge portion that constitute the cutting edge do not intersect at the right angle. Thus, even when the shaft is not perpendicular to the surface to be deburred of the workpiece during a deburring process, the surface to be deburred can be prevented or suppressed from being damaged by the corner of the cutting edge rotating around the axis.

In the present invention, the connecting end edge portion may be curved to the proximal end side from an end on the outer peripheral side of the distal end edge portion toward the outer peripheral side and continuous to an end on a distal end side of the outer peripheral end edge portion.

In the present invention, the inner wall surface of the notch may have a connecting surface portion extending in the circumferential direction and in an axial direction along the axis and connecting end edges on an inner peripheral side of a pair of the opposed surface portions, and the distal end surface may be continuous to an inner peripheral side of a distal end edge of the connecting surface portion. In this way, the notch is widened so that the space between the pair of opposed surface portions in the circumferential direction can receive shavings of burrs. The shavings received in this space are discharged to the outer peripheral side of the shaft by rotation of the deburring tool. Accordingly, it is easy to prevent or suppress shavings from interfering with the cutting edge when it shears the burr.

In the present invention, the shaft has a plurality of the notches at equal angular intervals. In this way, a plurality of cutting edges can be provided at equal angular intervals in the circumferential direction, so that the cutting edges can be brought into contact with the burr multiple times in one rotation of the shaft.

In the present invention, the plurality of notches of the shaft may comprise four notches. A width dimension in the circumferential direction of a blade section located between two of the notches adjacent to each other in the circumferential direction may be 1/3 or more of a radius of the shaft. An opening width in the circumferential direction of an outer peripheral-side opening in which each of the notches opens to the outer peripheral surface may be 2/3 or more of the radius of the shaft. In this way, when four notches are provided, it is easy to ensure the width dimension in the circumferential direction of the blade section, thereby increasing the strength of the blade section. Thus, chipping of the blade section can be prevented or suppressed. In this way, it is also easy to ensure the opening width of the outer peripheral-side opening of the notch. Here, ensuring the opening width of the outer peripheral-side opening of the notch can increase the feeding speed of moving the shaft when the deburring tool is moved in a direction along the surface to be deburred.

In the present invention, a length dimension in the axial direction of the notch may be equal to or larger than a radius of the shaft. This configuration can ensure the length in the axial direction of the notch. Thus, for example, when the cutting power of the cutting edge decreases, a new distal end surface can be formed by cutting off the distal end of the shaft. In addition, an annular connecting surface can be formed by cutting off the corner between the new distal end surface and the outer peripheral surface of the shaft. In this way, a new cutting edge can be provided in the shaft.

In the present invention, the shaft may have a through hole passing through a center of the shaft in the axial direction and opening to the distal end surface. In this way, coolant and air can be supplied from the proximal end side to the distal end surface side of the shaft through the through hole.

In the present invention, the distal end surface may be orthogonal to the axis. In other words, the distal end surface can be orthogonal to the axis of the shaft when the shape of the shaft is measured by a micrometer-order shape measuring machine.

In this case, the distal end surface may have a center portion with a protrusion having a shape that tapers toward a distal end side, and a distance in the axial direction between a distal end point located on a most distal end side in the protrusion and the outer peripheral end of the distal end surface may be 50 um or less. In other words, the distal end surface orthogonal to the axis may have a center portion having a tapered protrusion with a height dimension of 50 um or less. Here, the height dimension of the protrusion is 50 p or less. Thus, the presence of the protrusion can be confirmed by measuring the shape of the shaft using a micrometer-order shape measuring machine. However, an observer who visually observes the deburring tool is unable to recognize the presence of the protrusion. Therefore, it can be said that the shaft has the distal end surface orthogonal to the axis when visually observed. With such a protrusion, when the distal end surface of the deburring tool is brought into abutment with the surface to be deburred of the workpiece, the outer peripheral end portion of the distal end surface (the outer peripheral portion of the distal end edge portion of the cutting edge) is not in intimate contact with the surface to be deburred. Thus, even when the positional relationship between the axis of the deburring tool and the surface to be deburred of the workpiece deviates from the perpendicular in a deburring process, the biting of the cutting edge of the deburring tool on the surface to be deburred can be prevented or suppressed. The protrusion is minute. Thus, even when the outer peripheral end portion of the distal end surface is not in intimate contact with the surface to be deburred when the distal end surface of the deburring tool is brought into abutment with the surface to be deburred of the workpiece, the burr rising from the surface to be deburred is less likely to be left unshaved.

In the present invention, the distal end surface may have a shape that tapers to a distal end side toward the axis, and a distance in the axial direction between a distal end point located on a most distal end side in the distal end surface and the outer peripheral end of the distal end surface may be 50 um or less. In other words, the distal end surface as a whole may have a shape that tapers toward the distal end side. Here, the distance in the axial direction between a distal end point located on a most distal end side in the distal end surface and the outer peripheral end of the distal end surface is 50 um or less. Thus, the shape of the distal end surface can be acquired by measuring the shape of the shaft using a micrometer-order shape measuring machine. However, an observer is unable to recognize the shape by visual observation. Therefore, it can be said that the shaft has the distal end surface orthogonal to the axis when visually observed. With the distal end surface having such a shape, when the distal end surface of the deburring tool is brought into abutment with the surface to be deburred of the workpiece, the outer peripheral end portion of the distal end surface (the outer peripheral portion of the distal end edge portion of the cutting edge) is not in intimate contact with the surface to be deburred. Thus, even when the positional relationship between the axis of the deburring tool and the surface to be deburred of the workpiece deviates from the perpendicular in a deburring process, the biting of the cutting edge of the deburring tool on the surface to be deburred can be prevented or suppressed. The distance in the axial direction between the distal end point and the outer peripheral end of the distal end surface is 50 um or less. Thus, even when the outer peripheral end portion of the distal end surface is not in intimate contact with the surface to be deburred when the distal end surface of the deburring tool is brought into abutment with the surface to be deburred of the workpiece, the burr rising from the surface to be deburred is less likely to be left unshaved.

A deburring method of the present invention comprises: attaching the deburring tool described above to a machine tool via a floating holder; and while rotating the deburring tool around the axis, bringing the distal end surface into contact with a surface to be deburred of a workpiece and moving the distal end surface along the surface to be deburred to remove a burr on the surface to be deburred.

In a deburring process in which the deburring tool is attached to a machine tool via a floating holder, when the burr on the surface to be deburred of the workpiece is hard and the cutting edge is unable to shear the burr, the force acting on the blade section from the burr causes the shaft to retract in the axial direction. Thus, chipping of the cutting edge and the blade section can be prevented or suppressed during a deburring process.

### Advantageous Effects of Invention

The deburring tool and the deburring method of the present invention can prevent or suppress chipping of the cutting edge and the blade section during a deburring process.

### Brief Description of Drawings

FIG. 1 is a perspective view of a deburring tool in Example 1.
FIG. 2 is a plan view of the deburring tool as viewed from a distal end side.
FIG. 3 is an illustration of a deburring method.
FIG. 4 is a flowchart of the deburring method.
FIG. 5 is an illustration of a rake angle at the point in time when a cutting edge comes into contact with a burr.
FIG. 6 is an illustration of a blade section leaving the burr.
FIG. 7 is an illustration of the direction of the vector of load exerted on the cutting edge during a deburring process.
FIG. 8 is a perspective view of a deburring tool in Modification 1.
FIG. 9 is a perspective view of a deburring tool in Modification 2.
FIG. 10 is a plan view of the deburring tool in Modification 2 as viewed from the distal end side.
FIG. 11 is an illustration of a deburring tool in Modification 3.
FIG. 12 is a perspective view of a deburring tool in Example 2.
FIG. 13 is a graph of the shape measurement result of the center portion of the distal end surface of the deburring tool in Example 2.
FIG. 14 is an illustration of the cutting edge biting a surface to be deburred.
FIG. 15 is an illustration of a state in which the biting of the cutting edge is avoided by employing the deburring tool in Example 2.
FIG. 16 illustrates another example of the distal end surface of the deburring tool in Example 2.
FIG. 17 is a perspective view of a deburring tool in Example 3.
FIG. 18 is an illustration of the shape of the distal end surface of the deburring tool in Example 3.
FIG. 19 is an illustration of a modification of the shape of the distal end surface of the deburring tool in Example 3.
FIG. 20 is an illustration of a cutting edge coming into contact with a burr in a conventional deburring tool.
FIG. 21 is an illustration of a blade section leaving the burr in the conventional deburring tool.

### Description of Embodiments

A deburring tool and a deburring method according to embodiments of the present invention will be described below with reference to the drawings.

### (Example 1)

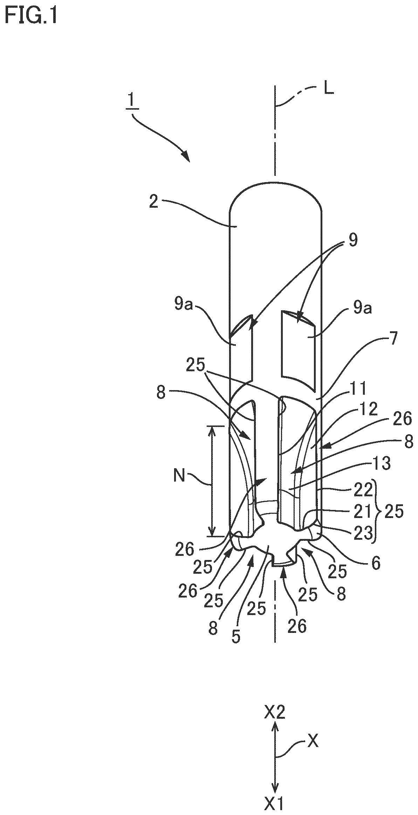

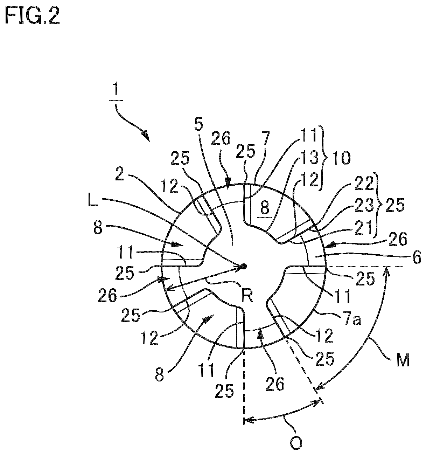

FIG. 1 is a perspective view of a deburring tool. FIG. 2 is a plan view of the deburring tool as viewed from a distal end side. As illustrated in FIG. 1, a deburring tool 1 in this example has a shaft 2. The shaft 2 is made of cemented carbide or high-speed steel (HSS). In the following description, the direction along an axis L of the shaft 2 is denoted as axial direction X, the distal end side of the shaft 2 in the axial direction X is denoted as X1 direction, and the side opposite to the X1 direction in the axial direction X is denoted as X2 direction. The X2 direction is the proximal end side of the shaft 2.

The shaft 2 has a distal end surface 5 orthogonal to its axis L, an annular connecting surface 6 extending in the X2 direction from an outer peripheral end of the distal end surface 5 toward the outer peripheral side, and an annular outer peripheral surface 7 extending parallel to the axis L from an end in the X2 direction of the connecting surface 6. The shaft 2 also has four notches 8 at four locations in the circumferential direction around the axis L of the shaft 2. The four notches 8 each open to the distal end surface 5, the connecting surface 6, and the outer peripheral surface 7. The four notches 8 are provided at equal angular intervals around the axis L. In this example, the distal end surface 5 is a flat surface.

As illustrated in FIG. 2, each of the notches 8 has an inner wall surface 10 having a pair of opposed surface portions 11 and 12 opposed to each other in the circumferential direction, and a connecting surface portion 13 extending in the circumferential direction and connecting the end edges on the inner peripheral side of the pair of opposed surface portions 11 and 12. Each of the pair of opposed surface portions 11 and 12 extends in the radial direction around the axis L. The connecting surface portion 13 is a curved surface of an arc in which a center portion in the circumferential direction is located on the outer peripheral side with respect to both ends. Each of the corners where the pair of opposed surface portions 11 and 12 intersect with the connecting surface portion 13 is rounded. The connecting surface portion 13 may be a flat surface extending linearly in the circumferential direction between the pair of opposed surface portions 11 and 12.

As illustrated in FIG. 1, the outer peripheral edge of each of the opposed surface portions 11 and 12 has a distal end edge portion 21 continuous to the distal end surface 5 in the circumferential direction, an outer peripheral end edge portion 22 continuous to the outer peripheral surface 7 in the circumferential direction, and a connecting end edge portion 23 continuous to the connecting surface 6 in the circumferential direction. The connecting end edge portion 23 connects the distal end edge portion 21 and the outer peripheral end edge portion 22. The connecting end edge portion 23 is an arc that is curved in the X2 direction from an end on the outer peripheral side of the distal end edge portion 21 toward the outer peripheral side and continuous to an end in the X1 direction of the outer peripheral end edge portion 22, in conformity with a cross-sectional profile of the connecting surface 6.

The distal end edge portion 21, the outer peripheral end edge portion 22, and the connecting end edge portion 23 of each of the opposed surface portions 11 and 12 form a cutting edge 25 of the deburring tool 1. The opposed surface portion 11 is a rake surface of the cutting edge 25 at the outer peripheral edge of the opposed surface portion 11. The opposed surface portion 12 is a rake surface of the cutting edge 25 at the outer peripheral edge of the opposed surface portion 12. Here, each of the rake surfaces (each of the opposed surface portions 11 and 12) extends in the radial direction and parallel to the axis L. Thus, the rake angle of the cutting edge 25 is 90°.

As illustrated in FIG. 2, in the deburring tool 1 in this example in which the shaft 2 has the notches 8 at four locations in the circumferential direction, an opening width M in the circumferential direction of an outer peripheral-side opening 7a in which the notch 8 opens to the outer peripheral surface 7 is preferably 2/3 or more of the radius R of the shaft 2. As illustrated in FIG. 1, a length dimension N in the axial direction X of the notch 8 is preferably equal to or larger than the radius R of the shaft 2. An end portion in the X2 direction in the notch 8 has a depth in the radial direction that decreases toward the X2 direction. Between two notches 8 adjacent to each other in the circumferential direction is a blade section 26 with cutting edges 25 on the outer peripheral edge on one side and on the outer peripheral edge on the other side in the circumferential direction. In this example, the shaft 2 has four blade sections 26. As illustrated in FIG. 2, a width dimension O in the circumferential direction of the outer peripheral surface 7 of each of the blade sections 26, that is, a dimension of the blade section 26 in the circumferential direction along the outer peripheral surface 7, is preferably 1/3 or more of the radius R of the shaft 2.

Here, the distal end surface 5 is present on the inner peripheral side of each notch 8 and on the inner peripheral side of the connecting surface 6 in each blade section 26. The distal end surface 5 has a circular portion coaxial with the axis L and four protruding portions that protrude radially from the circular portion to the outside in the radial direction.

As illustrated in FIG. 1, the shaft 2 also has a cut section 9 where the outer peripheral surface is partially cut in the X2 direction of the notch 8. The cut section 9 has a flat surface 9a parallel to the axis. In this example, the shaft 2 has two cut sections 9. The flat surface 9a of one of the cut sections 9 is perpendicular to the flat surface of the other cut section 9.

### (Deburring Method)

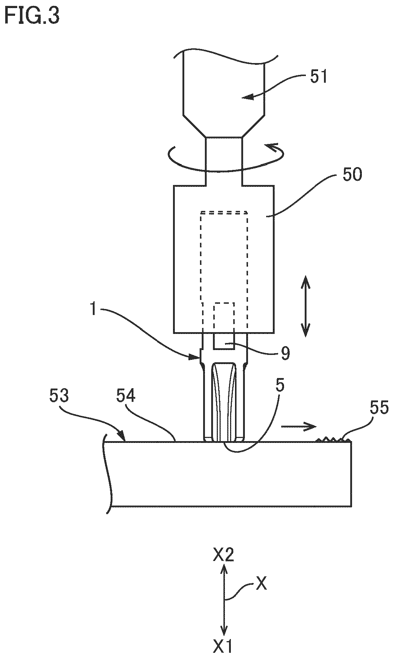

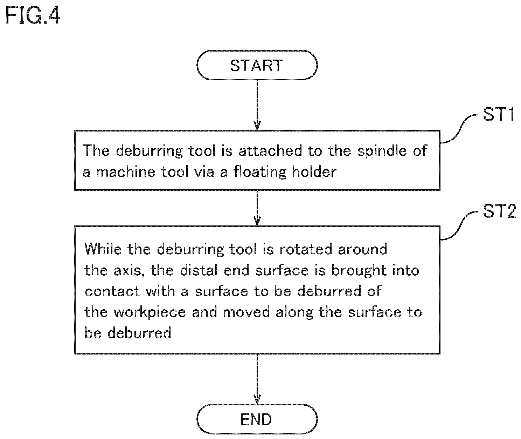

FIG. 3 is an illustration of a deburring method using the deburring tool 1. FIG. 4 is a flowchart of the deburring method using the deburring tool 1. As illustrated in FIGS. 3 and 4, when deburring a workpiece, the deburring tool 1 is attached to the spindle of a machine tool 51 via a floating holder 50 (step ST1). Then, while the deburring tool 1 is rotated around the axis L, the distal end surface 5 is brought into contact with a surface 54 to be deburred of the workpiece 53 and moved along the surface 54 to be deburred (step ST2). In this way, the deburring tool 1 shears burrs 55 present on the edge of the surface 54 to be deburred. The direction of rotation of the deburring tool 1 may be clockwise or counterclockwise.

Here, the floating holder 50 is a common one. The floating holder 50 holds the deburring tool 1 so as to advance and retract the deburring tool 1 in the axial direction between an advanced position and a retracted position in the X2 direction relative to the advanced position. The floating holder 50 biases the deburring tool 1 to the advanced position with a predetermined biasing force.

### (Operation Effects)

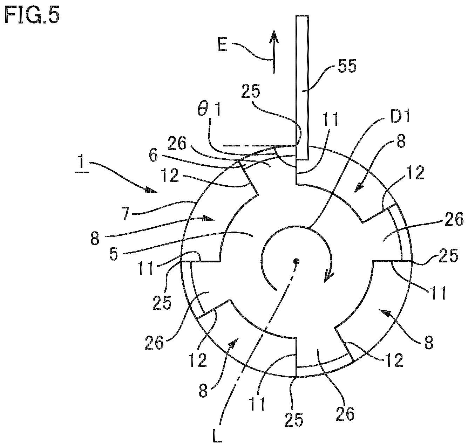

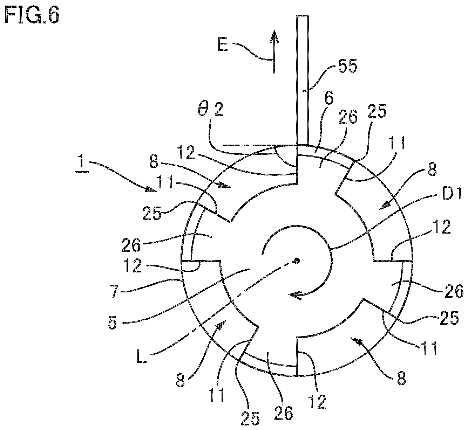

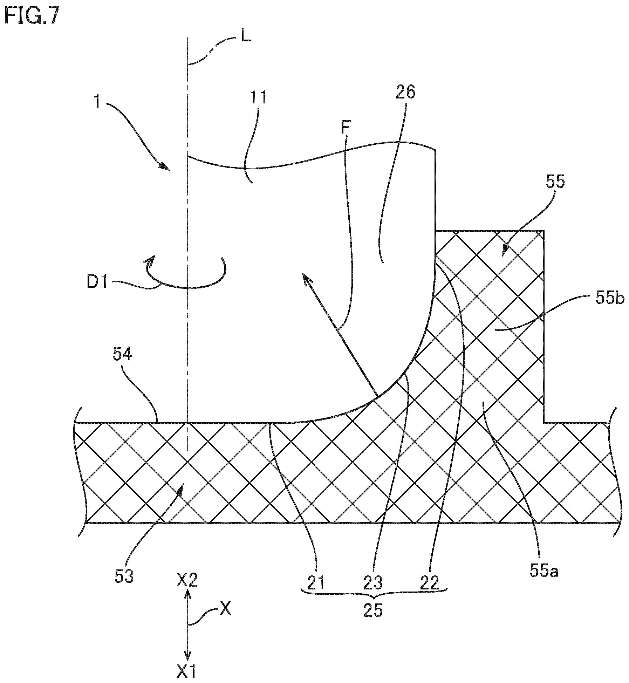

FIG. 5 is an illustration of the cutting edge 25 coming into contact with the burr 55 in a deburring operation. FIG. 6 is an illustration of the blade section 26 leaving the burr 55 in the deburring operation. FIG. 7 is an illustration of the direction of force received by the cutting edge 25 and the blade section 26 from the burr 55 in the deburring operation. FIG. 7 illustrates an enlarged view of the area around the cutting edge 25 in the shaft 2.

In the example illustrated in FIGS. 5, 6, and 7, the outer peripheral edge of one opposed surface portion 11 is the cutting edge 25 that shears the burr 55. When the cutting edge 25 shears the burr 55, the shaft 2 moves in a direction E approaching the burr 55 while rotating in a predetermined direction D1. The rake surface of the cutting edge 25 is one opposed surface portion 11. Here, the rake surface (one opposed surface portion 11) of the deburring tool 1 in this example extends in the radial direction. Thus, as illustrated in FIG. 5, at the point in time when the cutting edge 25 comes into contact with the burr 55, the rake angle θ1 formed by the tangent line of the shaft 2 passing through the point of contact with the burr 55 and the rake surface of the cutting edge 25 is 90°. In other words, the rake angle θ1 of the cutting edge 25 is not an acute angle at the point in time when the cutting edge 25 comes into contact with the burr 55.

As illustrated in FIG. 6, in the deburring tool 1 in this example, the outer peripheral edge of the other opposed surface portion 12 is in contact with the burr 55 at the point in time when the blade section 26 of the shaft 2 rotating in the predetermined direction D1 leaves the burr 55. Here, the other opposed surface portion 12 extends in the radial direction. Thus, as illustrated in FIG. 6, at the point in time when the blade section 26 leaves the burr 55, an angle θ2 formed by the tangent line of the shaft 2 passing through the point of contact with the burr 55 and the other opposed surface portion 12 is 90°. In other words, the angle at which the blade section 26 is in contact with the burr 55 is not an acute angle at the point in time when the blade section 26 leaves the burr 55. Therefore, even when the deburring tool 1 is used to remove high-strength burrs such as burrs formed on helical gears, chipping of the cutting edge 25 and the blade section 26 can be prevented or suppressed.

The burr 55 rising from the edge of the surface 54 to be deburred has higher rigidity at a root portion 55a of the burr 55 continuous to the surface 54 to be deburred than at a distal end portion 55b of the burr 55. Thus, when the high-strength burr 55 is removed, load tends to be exerted on the part of the cutting edge 25 that shears the root portion of the burr 55, and chipping tends to occur in this part.

In this respect, in this example, the deburring tool 1 is attached to the machine tool 51 via the floating holder 50, as illustrated in FIG. 3. The shaft 2 has the annular connecting surface 6 extending to the proximal end side from the outer peripheral end of the distal end surface 5 toward the outer peripheral side between the distal end surface 5 and the outer peripheral surface 7. In this configuration, in the cutting edge 25, which is the outer peripheral edge of each of the opposed surface portions 11 and 12, the connecting end edge portion 23 continuous to the connecting surface 6 in the circumferential direction extends to the proximal end side from the outer peripheral end of the distal end surface 5 toward the outer peripheral side, in conformity with the cross-sectional shape of the connecting surface 6. In this example, the connecting end edge portion 23 is an arc that is curved to the proximal end side from an end on the outer peripheral side of the distal end edge portion 21 toward the outer peripheral side and continuous to an end on the distal end side of the outer peripheral end edge portion 22. Thus, as illustrated in FIG. 7, if load is exerted on the cutting edge 25 from the root portion 55a of the burr 55 when the cutting edge 25 shears the root portion 55a of the burr 55, the vector F of the load points to the X2 direction. As a result, the force in the X2 direction is exerted on the floating holder 50, so that the floating holder 50 functions to allow the deburring tool 1 to retract in the X2 direction from the surface 54 to be deburred. Accordingly, chipping of the cutting edge 25 can be prevented or suppressed.

In this example, the cutting edge 25 has the connecting end edge portion 23 between the distal end edge portion 21 and the outer peripheral end edge portion 22 that is curved to the proximal end side from an end on the outer peripheral side of the distal end edge portion 21 toward the outer peripheral side and continuous to an end on the distal end side of the outer peripheral end edge portion 22. In this configuration, the distal end edge portion 21 and the outer peripheral end edge portion 22 that constitute the cutting edge 25 do not intersect at the right angle. Thus, even when the shaft 2 is not perpendicular to the surface 54 to be deburred of the workpiece 53 during a deburring process, the surface 54 to be deburred can be prevented or suppressed from being damaged by the corner of the cutting edge 25 rotating around the axis L.

Furthermore, in this example, the inner wall surface 10 of the notch 8 has the connecting surface portion 13 that extends in the circumferential direction and the axial direction X and connects the end edges on the inner peripheral side of the pair of opposed surface portions 11 and 12. The distal end surface 5 is continuous on the inner peripheral side of the distal end edge of the connecting surface portion 13. In this way, the space between the pair of opposed surface portions 11 and 12 in the circumferential direction easily receives shavings of burrs. The shavings stored in this space are discharged to the outer peripheral side of the shaft 2 by rotation of the deburring tool 1. It is easy to prevent or suppress shavings from interfering with the cutting edge 25 when it shears the burr 55.

In this example, the shaft 2 has a plurality of notches 8 at equal angular intervals. In this configuration, a plurality of cutting edges 25 can be provided at equal angular intervals in the circumferential direction, so that the cutting edges 25 can be brought into contact with the burr multiple times in one rotation of the shaft 2.

In this example, the shaft 2 has four notches 8. The width dimension O in the circumferential direction of the blade section 26 located between two notches 8 adjacent to each other in the circumferential direction is 1/3 or more of the radius R of the shaft 2. In this way, when four notches 8 are provided in the shaft 2 as in the deburring tool 1 in this example, it is easy to ensure the width dimension O in the circumferential direction of the blade section 26. Therefore, chipping of the blade section 26 can be prevented or suppressed.

Furthermore, in this example, when the shaft 2 has four notches 8, the opening width M in the circumferential direction of the outer peripheral-side opening 7a in which the notch 8 opens to the outer peripheral surface 7 is 2/3 or more of the radius R of the shaft 2. In this way, it is easy to ensure the opening width M of the outer peripheral-side opening 7a of the notch 8. Here, ensuring the opening width M of the outer peripheral-side opening 7a of the notch 8 facilitates removal of shavings of burrs. In addition, when the deburring tool 1 is moved in a direction along the surface 54 to be deburred, the feeding speed of moving the shaft 2 can be increased.

In this example, the length dimension N in the axial direction of the notch 8 is twice or more of the radius E of the shaft 2. This configuration can ensure the length in the axial direction of the notch 8. Therefore, when the cutting power of the cutting edge 25 decreases, a new cutting edge 25 can be provided in the shaft 2 by cutting the shaft 2 in the middle of the notch 8 in the axial direction in a direction orthogonal to the axis L so that the cross section serves as a new distal end surface 5 of the deburring tool 1, and by cutting off the corner between the new distal end surface 5 and the outer peripheral surface 7 to form an annular connecting surface 6 extending to the proximal end side from the outer peripheral end of the distal end surface 5 toward the outer peripheral side between the new distal end surface 5 and the outer peripheral surface 7.

The opening width M of each notch 8 and the width in the circumferential direction of the blade section 26 may be changed from those of the above example. The number of notches 8 may be one, two, or three, or five or more.

### (Modifications)

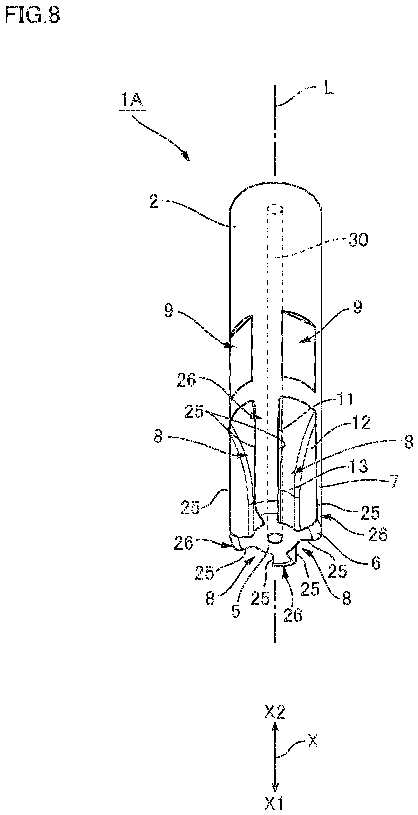

FIG. 8 is an illustration of a deburring tool 1A in Modification 1. In the deburring tool 1A in Modification 1, the shaft 2 has a through hole 30 that passes through its center in the axial direction and opens to the distal end surface 5. Thus, the distal end surface 5 has an opening of the through hole 30 in the center of its circular portion. The other configuration of the deburring tool 1A is the same as the deburring tool 1 described above. The through hole 30 is a supply hole for supplying coolant and air to the distal end side of the shaft 2.

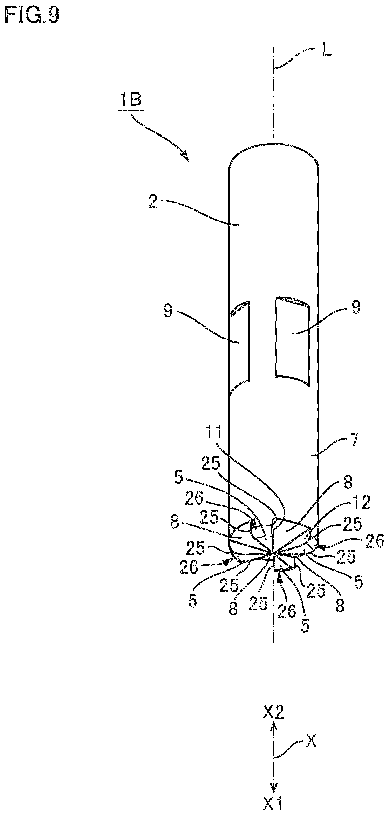

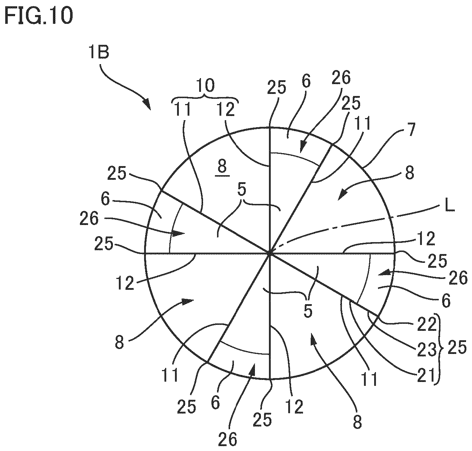

FIG. 9 is a perspective view of a deburring tool in Modification 2. FIG. 10 is a plan view of the deburring tool in Modifications 2 as viewed from the distal end side in the axial direction X. A deburring tool 1B in Modification 2 differs from the deburring tool 1 described above in the shape of the notches 8. Since the deburring tool 1B has a configuration corresponding to that of the deburring tool 1, the corresponding configuration is denoted by the same symbol and will not be further elaborated.

In the deburring tool 1B, the shaft 2 has four notches 8 at equal angular intervals in the circumferential direction. As illustrated in FIG. 9, the inner wall surface 10 of each of the notches 8 has a pair of opposed surface portions 11 and 12. Each of the pair of opposed surface portions 11 and 12 extends in the radial direction around the axis L. As illustrated in FIG. 10, the inner peripheral ends of the opposed surface portions 11 and 12 intersect at an acute angle at the center of the shaft 2. The outer peripheral edge of each of the opposed surface portions 11 and 12 has a distal end edge portion 21 continuous to the distal end surface 5 in the circumferential direction, an outer peripheral end edge portion 22 continuous to the outer peripheral surface 7 in the circumferential direction, and a connecting end edge portion 23 continuous to the connecting surface 6 in the circumferential direction. The connecting end edge portion 23 is an arc that is curved in the X2 direction from an end on the outer peripheral side of the distal end edge portion 21 toward the outer peripheral side and continuous to an end in the X1 direction of the outer peripheral end edge portion 22.

The distal end edge portion 21, the outer peripheral end edge portion 22, and the connecting end edge portion 23 of each of the opposed surface portions 11 and 12 form a cutting edge 25. The opposed surface portion 11 is a rake surface of the cutting edge 25 at the outer peripheral edge of the opposed surface portion 11. The opposed surface portion 12 is a rake surface of the cutting edge 25 at the outer peripheral edge of the opposed surface portion 12. Here, each of the opposed surface portions 11 and 12 extends in the radial direction and parallel to the axis L. Thus, the rake angle of the cutting edge 25 is 90°. An angle θ2 formed by the tangent line of the shaft 2 passing through the point of contact with the burr 55 and each of the opposed surface portions 11 and 12 is 90° at the point in time when the blade section 26 leaves the burr 55.

The notch 8 has a depth increasing in the X2 direction from the center of the shaft 2 toward the outer peripheral side. Between two notches 8 adjacent to each other in the circumferential direction is a blade section 26 with cutting edges 25 on the outer peripheral edge on one side and on the outer peripheral edge on the other side in the circumferential direction. The distal end surface 5 is located on the inner peripheral side of the connecting surface 6 in each blade section 26. The distal end surface 5 consists of four fan-shaped portions arranged radially.

When the deburring tool 1 in this example is used to perform deburring, the deburring tool 1 is also connected to the machine tool 51 via the floating holder 50. Chipping of the cutting edge 25 and the blade section 26 can be suppressed even when the deburring tool 1 in this example is used.

### (Modifications)

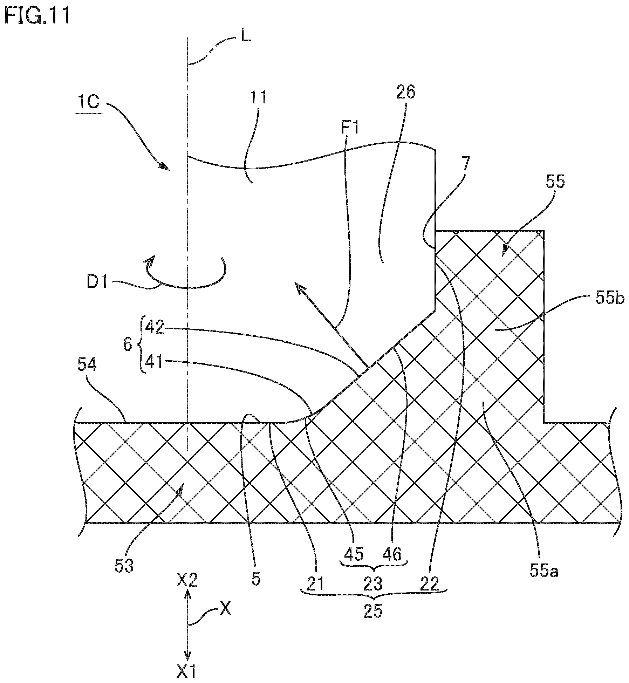

FIG. 11 is an illustration of a deburring tool in Modification 3. FIG. 11 illustrates the deburring tool in Modification 3 moving along the surface 54 to be deburred and shearing the root portion 55a of the burr 55 with the cutting edge 25. As illustrated in FIG. 11, a deburring tool 1C in Modification 3 differs from the deburring tool 1 in the shape of the connecting surface 6 that connects the distal end surface 5 and the outer peripheral surface 7 at a distal end portion of the shaft 2. The other configuration of the deburring tool 1C, except for the connecting surface 6, is the same as the deburring tool 1, so the connecting surface 6 will be described and the other configuration will not be further elaborated.

In this example, the connecting surface 6 has an annular curved surface portion 41 that is curved in the X2 direction from the outer peripheral edge of the distal end surface 5 toward the outer peripheral side, and an annular tapered surface portion 42 that is inclined in the X2 direction from an end edge on the outer peripheral side of the curved surface portion 41 toward the outer peripheral side. The end edge on the outer peripheral side of the tapered surface portion 42 is continuous to the outer peripheral surface 7. Thus, in the cutting edge 25, the connecting end edge portion 23 connecting the distal end edge portion 21 and the outer peripheral end edge portion 22 has a curved portion 45 that is curved in the X2 direction from an end on the outer peripheral side of the distal end edge portion 21 toward the outer peripheral side, and an inclined portion 46 that is inclined in the X2 direction from an end on the outer peripheral side of the curved portion 45 toward the outer peripheral side, in conformity with the cross-sectional profile of the connecting surface 6. An end on the outer peripheral side of the inclined portion 46 is continuous to the outer peripheral end edge portion 22.

Also in the deburring tool 1C in Modification 3, if load is exerted on the cutting edge 25 from the root portion 55a of the burr 55 when the cutting edge 25 shears the root portion 55a of the burr 55, the vector F1 of the load points to the X2 direction. As a result, the force in the X2 direction is exerted on the floating holder 50, so that the floating holder 50 functions to allow the deburring tool 1 to retract in the X2 direction from the surface 54 to be deburred. Accordingly, chipping of the cutting edge 25 can be prevented or suppressed.

The distal end edge portion 21 and the outer peripheral end edge portion 22 that constitute the cutting edge 25 do not intersect at the right angle. Thus, even when the shaft 2 is not perpendicular to the surface 54 to be deburred of the workpiece 53 during a deburring process, the surface 54 to be deburred can be prevented or suppressed from being damaged by the corner of the cutting edge 25 rotating around the axis L.

The connecting surface 6 can be a tapered surface that extends to the outer peripheral side toward the outer peripheral surface 77. In other words, in the deburring tool 1C in Modification 3, the connecting surface 6 does not have the curved surface portion 41 but has the tapered surface portion 42 alone. In this case, in the cutting edge 25, the connecting end edge portion 23 connecting the distal end edge portion 21 and the outer peripheral end edge portion 22 is inclined in the X2 direction from an end on the outer peripheral side of the distal end edge portion 21 toward the outer peripheral side and connected to the outer peripheral end edge portion 22, in conformity with the cross-sectional profile of the connecting surface 6. Also in this configuration, if load is exerted on the cutting edge 25 from the root portion 55a of the burr 55 when the cutting edge 25 shears the root portion 55a of the burr 55, the vector of the load points to the X2 direction. Thus, when load is exerted on the cutting edge 25 from the root portion 55a of the burr 55, the floating holder 50 functions to allow the deburring tool 1 to retract in the X2 direction from the surface 54 to be deburred. Accordingly, chipping of the cutting edge 25 can be prevented or suppressed. The distal end edge portion 21 and the outer peripheral end edge portion 22 that constitute the cutting edge 25 do not intersect at the right angle. Thus, even when the shaft 2 is not perpendicular to the surface 54 to be deburred of the workpiece 53 during a deburring process, the surface 54 to be deburred can be prevented or suppressed from being damaged by the corner of the cutting edge 25 rotating around the axis L.

### (Example 2)

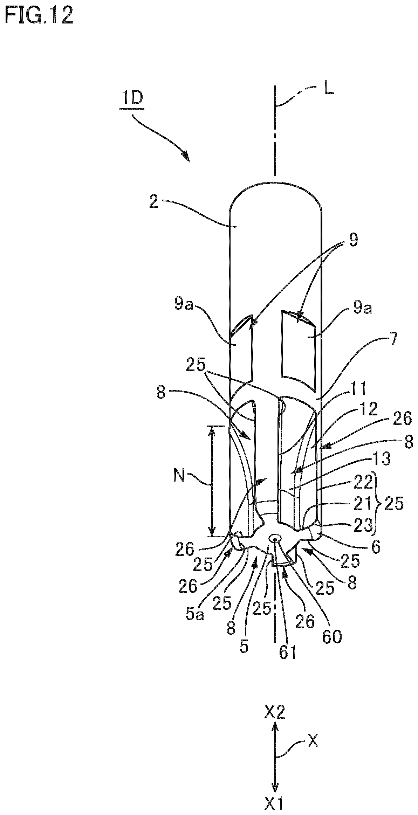

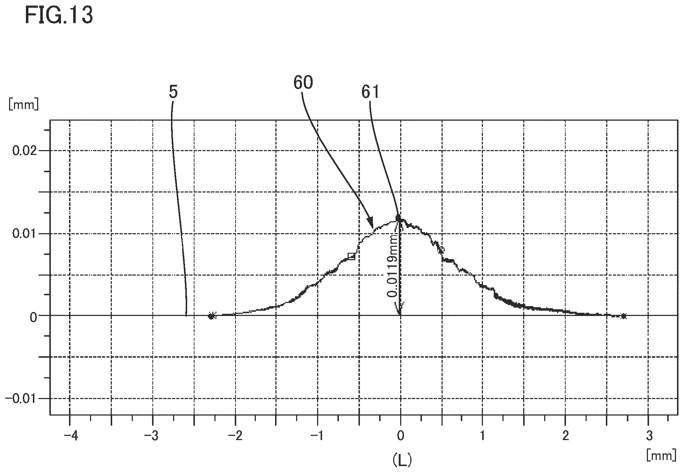

FIG. 12 is a perspective view of a deburring tool 1D in Example 2. FIG. 13 is a graph illustrating the shape measurement result of the center portion of the distal end surface 5 of the deburring tool 1D in Example 2. In FIG. 12, a protrusion 60 on the distal end surface 5 of the deburring tool 1D is illustrated in an exaggerated manner.

In the deburring tool 1D in Example 1, the distal end surface 5 of the shaft 2 is a flat surface orthogonal to the axis L. In contrast, in the deburring tool 1D in this example, the distal end surface 5 of the shaft 2 has a minute protrusion 60 at the center portion. Here, the deburring tool 1D in Example 2 has the same configuration as Example 1, except that the distal end surface 5 has the protrusion 60. Thus, in the description of Example 2, the configuration corresponding to that of Example 1 is denoted by the same sign and will not be further elaborated. The deburring method for removing burrs on the surface to be polished of the workpiece 53 using the deburring tool 1D in Example 2 is the same as the deburring method in Example 1. Thus, the deburring method using the deburring tool 1D in Example 2 will not be further elaborated.

As illustrated in FIG. 12, the deburring tool 1D in this example has a shaft 2. The shaft 2 has a distal end surface 5 orthogonal to the axis L of the shaft 2 when visually observed, an annular connecting surface 6 extending in the X2 direction from an outer peripheral end 5a of the distal end surface 5 toward the outer peripheral side, and an annular outer peripheral surface 7 extending parallel to the axis L from an end in the X2 direction of the connecting surface 6. The shaft 2 also has four notches 8 at four locations in the circumferential direction around the axis L of the shaft 2. The four notches 8 each open to the distal end surface 5, the connecting surface 6, and the outer peripheral surface 7. The four notches 8 are provided at equal angular intervals around the axis L.

Each of the pair of opposed surface portions 11 and 12 extends in the radial direction around the axis L. The pair of opposed surface portions 11 and 12 each have a distal end edge portion 21, an outer peripheral end edge portion 22, and a connecting end edge portion 23. The distal end edge portion 21, the outer peripheral end edge portion 22, and the connecting end edge portion 23 form a cutting edge 25 of the deburring tool 1D. The opposed surface portion 11 is a rake surface of the cutting edge 25 at the outer peripheral edge of the opposed surface portion 11. The opposed surface portion 12 is a rake surface of the cutting edge 25 at the outer peripheral edge of the opposed surface portion 12. Here, each of the rake surfaces (each of the opposed surface portions 11 and 12) extends in the radial direction and parallel to the axis L. Thus, the rake angle of the cutting edge 25 is 90°.

The distal end surface 5 has a circular protrusion 60 at the center portion when viewed from the axial direction X. As illustrated in FIG. 13, the protrusion 60 has a shape that tapers toward the X1 direction (the distal end side). The distal end of the protrusion 60 is a curved surface protruding in the X1 direction. In the protrusion 60, a distance U in the axial direction X between a distal end point 61 at a most distal location in the X1 direction and the outer peripheral end 5a of the distal end surface 5 is 50 um or smaller. As can be seen from FIG. 13, the distance U in the axial direction X between the distal end point 61 and the outer peripheral end 5a of the distal end surface 5 is 0.0119 mm (11.9 µm). The protrusion 60 has a radius of 2.75 mm. The radius of the protrusion 60 is 1/4 or less of the radius R of the shaft 2. In this example, the axis L passes through the distal end point 61.

Here, the distance U in the axial direction X (height dimension of the protrusion 60) between the distal end point 61 and the outer peripheral end 5a of the distal end surface 5 is 50 µ or less. Thus, the presence of the protrusion 60 can be confirmed by measuring the shape of the shaft 2 using a micrometer-order shape measuring machine. However, an observer who visually observes the deburring tool 1D is unable to recognize the presence of the protrusion 60. Therefore, it can be said that the shaft 2 has the distal end surface 5 orthogonal to the axis L when visually observed.

### (Operation Effects)

The same operation effects as when the deburring tool 1 in Example 1 is used can be achieved when the deburring tool 1D in this example is used.

When the deburring tool 1D in this example is used, the biting of the cutting edge 25 of the deburring tool 1D on the surface 54 to be deburred of the workpiece 53 can be prevented or suppressed in a deburring process.

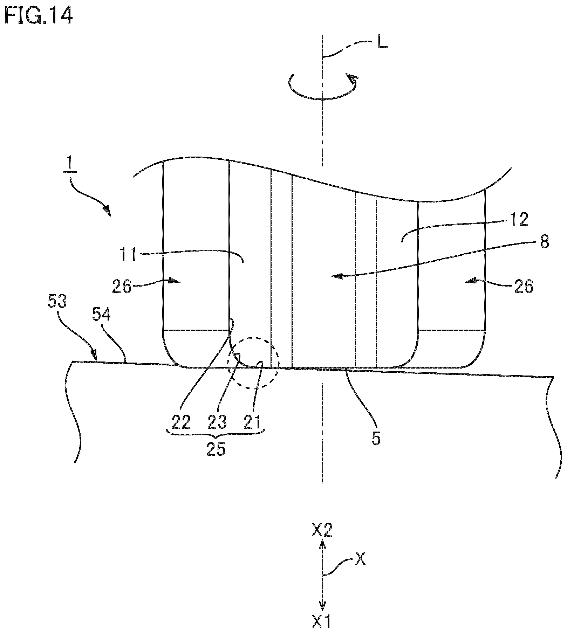

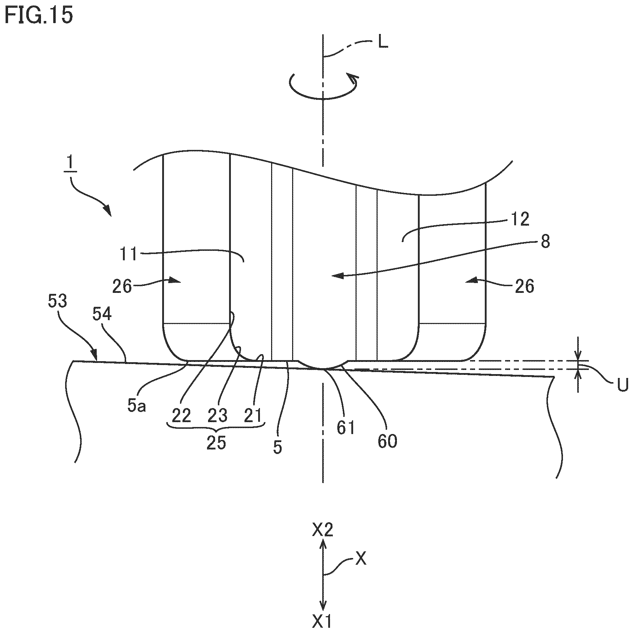

FIG. 14 is an illustration of the cutting edge 25 biting the surface 54 to be deburred. FIG. 15 is an illustration of a state in which the biting of the cutting edge 25 is avoided by employing the deburring tool 1D in Example 2. In FIGS. 14 and 15, the positional relationship between the deburring tool 1D and the workpiece 53, the shape of the distal end surface 5 of the deburring tool 1D, and the scale are represented in an exaggerated manner in order to make it easier to understand the state in which the cutting edge 25 bites the surface 54 to be deburred and the state in which the biting of the cutting edge 25 on the surface 54 to be deburred is avoided.

The biting of the cutting edge 25 on the surface 54 to be deburred can occur in the deburring tool 1 when the positional relationship between the axis L and the surface 54 to be deburred of the workpiece 53 deviates from the perpendicular. As used herein "the positional relationship between the axis L of the deburring tool 1D and the surface 54 to be deburred of the workpiece 53 deviates from the perpendicular" refers to a case where the attachment posture of the deburring tool 1D is inclined relative to an ideal attachment posture when the deburring tool 1D is attached to the machine tool 51, or a case where the installation posture of the workpiece 53 arranged so as to be opposed to the deburring tool 1D is inclined relative to an ideal installation posture. The biting of the cutting edge 25 on the surface 54 to be deburred occurs also when the deburring tool 1D is connected to the machine tool 51 using the floating holder 50.

When the positional relationship between the axis L of the deburring tool 1 and the surface 54 to be deburred of the workpiece 53 deviates from the perpendicular, as illustrated in the area enclosed by the dotted line in FIG. 14, the outer peripheral portion of the distal end edge portion 21 and the distal end portion of the connecting end edge portion 23 in the cutting edge 25 come into contact with the surface 54 to be deburred of the workpiece 53 at an acute angle and shave the surface 54 to be deburred. This state is the state in which the cutting edge 25 bites the surface 54 to be deburred. The surface 54 to be deburred is damaged if the cutting edge 25 bites.

For such biting of the cutting edge 25, the deburring tool 1D in this example has the protrusion 60 on the distal end surface 5. Thus, when the distal end surface 5 of the deburring tool 1D is brought into abutment with the surface 54 to be deburred of the workpiece 53, the outer peripheral end portion of the distal end surface 5 (the outer peripheral end portion of the distal end edge portion 21 of the cutting edge 25) is not in intimate contact with the surface 54 to be deburred. Accordingly, as illustrated in FIG. 15, even if the positional relationship between the axis L of the deburring tool 1D and the surface 54 to be deburred of the workpiece 53 deviates from the perpendicular in a deburring process, the biting of the outer peripheral portion of the distal end edge portion 21 and the distal end portion of the connecting end edge portion 23 in the cutting edge 25 on the surface 54 to be deburred can be prevented or suppressed.

The protrusion 60 is minute. Thus, even when the outer peripheral end portion of the distal end surface 5 is not in intimate contact with the surface 54 to be deburred when the distal end surface 5 of the deburring tool 1D is brought into abutment with the surface 54 to be deburred of the workpiece 53, the burr 55 rising from the surface 54 to be deburred is less likely to be left unshaved.

If the distance U in the axial direction X between the distal end point 61 of the protrusion 60 and the outer peripheral end 5a of the distal end surface 5 exceeds 50 µm, more burrs 55 are likely to be left unshaved during a deburring process. Thus, the distance U (height dimension of the protrusion 60) in the axial direction X between the distal end point 61 of the protrusion 60 and the outer peripheral end 5a of the distal end surface 5 is preferably 50 um or less, and more preferably 30 um or less. To avoid the biting of the cutting edge 25, it is preferable that the distance U (height dimension of the protrusion 60) in the axial direction X between the distal end point 61 of the protrusion 60 and the outer peripheral end 5a of the distal end surface 5 is 10 um or more.

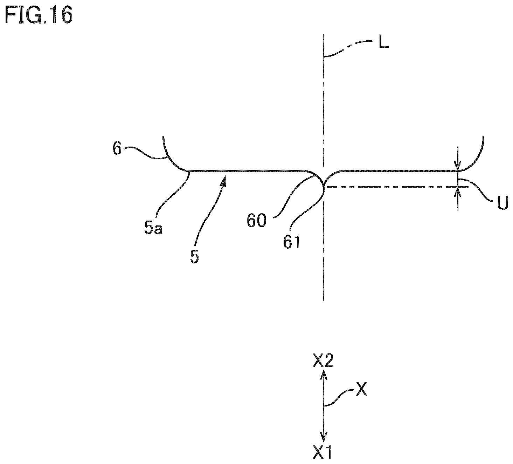

FIG. 16 illustrates another example of the distal end surface 5 of the deburring tool 1D in Example 2. As illustrated in FIG. 16, the protrusion 60 at the center portion of the distal end surface 5 has a shape that tapers toward the X1 direction and may have a pointed distal end.

### (Example 3)

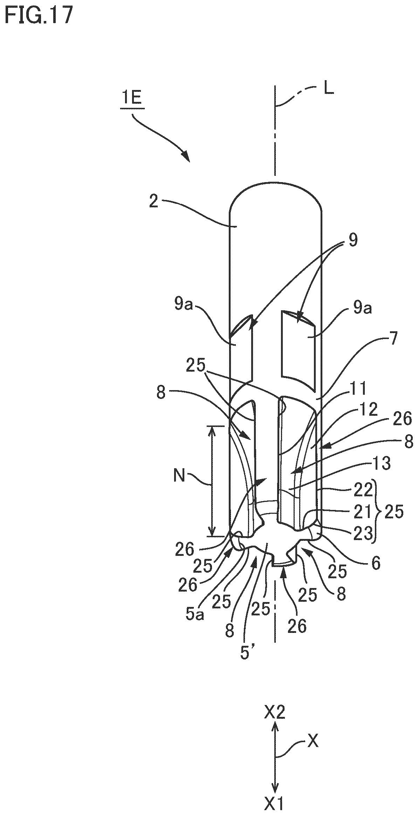

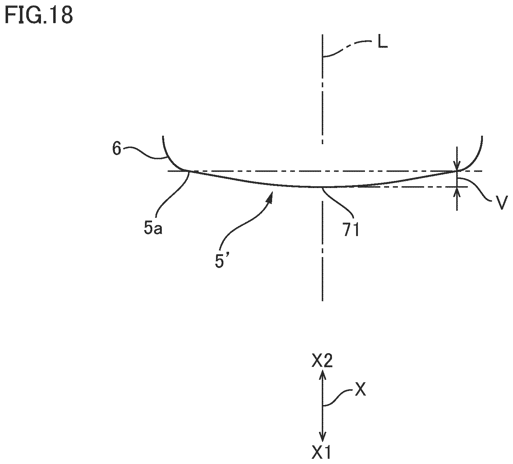

FIG. 17 is a perspective view of a deburring tool 1E in Example 3. FIG. 18 is an illustration of the shape of a distal end surface 5' of the deburring tool 1E in Example 3. In FIG. 18, the shape of the distal end surface 5' is exaggerated to make it easier to understand the shape of the distal end surface 5' of the deburring tool 1E in Example 3.

In the deburring tool 1E in Example 3, the distal end surface 5' of the shaft 2 has a shape that tapers toward the X1 direction (the distal end side). The deburring tool 1E in Example 3 has the same configuration as Example 1, except for the shape of the distal end surface 5'. Thus, in the description of Example 3, the configuration corresponding to that of Example 1 is denoted by the same sign and will not be further elaborated. The deburring method for removing burrs on the surface to be polished of the workpiece 53 using the deburring tool 1E in Example 3 is the same as the deburring method in Example 1. Thus, the deburring method using the deburring tool 1E in Example 3 will not be further elaborated.

As illustrated in FIG. 17, the deburring tool 1E in this example has a shaft 2. The shaft 2 has a distal end surface 5' orthogonal to the axis L of the shaft 2 when visually observed, an annular connecting surface 6 extending in the X2 direction from an outer peripheral end 5a of the distal end surface 5' toward the outer peripheral side, and an annular outer peripheral surface 7 extending parallel to the axis L from an end in the X2 direction of the connecting surface 6. The shaft 2 also has four notches 8 at four locations in the circumferential direction around the axis L of the shaft 2. The four notches 8 each open to the distal end surface 5', the connecting surface 6, and the outer peripheral surface 7. The four notches 8 are provided at equal angular intervals around the axis L.

Each of the pair of opposed surface portions 11 and 12 extends in the radial direction around the axis L. The pair of opposed surface portions 11 and 12 each have a distal end edge portion 21, an outer peripheral end edge portion 22, and a connecting end edge portion 23. The distal end edge portion 21, the outer peripheral end edge portion 22, and the connecting end edge portion 23 form a cutting edge 25 of the deburring tool 1E. The opposed surface portion 11 is a rake surface of the cutting edge 25 at the outer peripheral edge of the opposed surface portion 11. The opposed surface portion 12 is a rake surface of the cutting edge 25 at the outer peripheral edge of the opposed surface portion 12. Here, each of the rake surfaces (each of the opposed surface portions 11 and 12) extends in the radial direction and parallel to the axis L. Thus, the rake angle of the cutting edge 25 is 90°.

As illustrated in FIG. 18, the distal end surface 5' has a shape that tapers in the X1 direction toward the axis L. In other words, the distal end surface 5' as a whole is tapered toward the X1 direction. In the distal end surface 5', a distance V in the axial direction X between a distal end point 71 at a most distal location in the X1 direction and the outer peripheral end 5a of the distal end surface 5' is 50 um or less.

Here, the distal end surface 5' as a whole has a shape that tapers toward the X1 direction. However, in the distal end surface 5', the distance V in the axial direction X between the distal end point 71 at a most distal location in the X1 direction and the outer peripheral end 5a of the distal end surface 5' is 50 um or less. Thus, the shape of the distal end surface 5' can be confirmed by measuring the shape of the shaft 2 using a micrometer-order shape measuring machine. However, an observer who visually observes the deburring tool 1E is unable to recognize the shape of the distal end surface 5'. Therefore, it can be said that the shaft 2 has the distal end surface 5' orthogonal to the axis L when visually observed.

### (Operation Effects)

The same operation effects as when the deburring tool 1 in Example 1 is used can be achieved when the deburring tool 1E in this example is used. When the deburring tool 1E in this example is used, even if the positional relationship between the axis L of the deburring tool 1E and the surface 54 to be deburred of the workpiece 53 deviates from the perpendicular in a deburring process, the biting of the cutting edge 25 on the surface 54 to be deburred can be prevented or suppressed, in the same manner as when the deburring tool 1D in Example 2 is used.

In other words, when the deburring tool 1E in this example is employed, the outer peripheral end portion of the distal end surface 5' (the outer peripheral portion of the distal end edge portion 21 of the cutting edge 25) is not in intimate contact with the surface 54 to be deburred when the distal end surface 5' of the deburring tool 1E is brought into abutment with the surface 54 to be deburred of the workpiece 53. Thus, even if the positional relationship between the axis L of the deburring tool 1E and the surface 54 to be deburred of the workpiece 53 deviates from the perpendicular in a deburring process, the biting of the outer peripheral portion of the distal end edge portion 21 and the distal end portion of the connecting end edge portion 23 in the cutting edge 25 on the surface 54 to be deburred of the workpiece 53 can be prevented or suppressed. The distance V in the axial direction X between the distal end point 71 in the distal end surface 5' and the outer peripheral end 5a of the distal end surface 5' is 50 um or less. Thus, even when the outer peripheral end portion of the distal end surface 5' is not in intimate contact with the surface 54 to be deburred when the distal end surface 5' of the deburring tool 1E is brought into abutment with the surface 54 to be deburred of the workpiece 53, the burr 55 rising from the surface 54 to be deburred is less likely to be left unshaved.

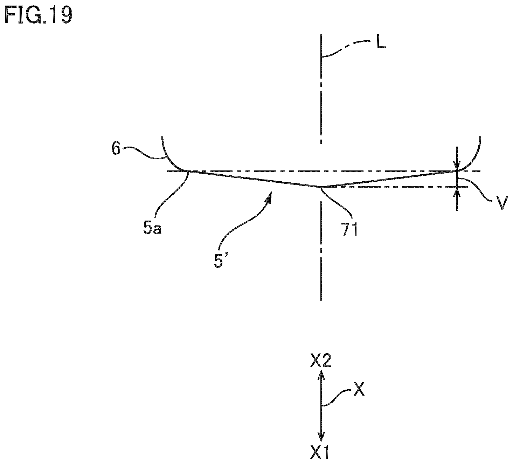

FIG. 19 is an illustration of another example of the distal end surface 5' of the deburring tool 1E in Example 3. As illustrated in FIG. 19, the distal end surface 5' may have a conical shape.

Also in this example, if the distance V in the axial direction X between the distal end point 71 of the distal end surface 5' and the outer peripheral end 5a of the distal end surface 5' exceeds 50 µm, more burrs 55 rising from the surface 54 to be deburred are likely to be left unshaved during a deburring process. Thus, the distance V in the axial direction X between the distal end point 71 of the protrusion 60 and the outer peripheral end 5a of the distal end surface 5' is preferably 50 um or less, and more preferably 30 um or less. To avoid the biting of the cutting edge 25, it is preferable that the distance V in the axial direction X between the distal end point 71 of the protrusion 60 and the outer peripheral end 5a of the distal end surface 5' is 10 um or more.

Here, the shape of the distal end surface 5' illustrated in FIGS. 18 and 19, that is, the shape of the distal end surface 5' of the shaft 2 that tapers toward the X1 direction (the distal end side), is applicable to the deburring tool 1A in Modification 1 illustrated in FIG. 8 and the deburring tool 1B in Modification 2 illustrated in FIG. 9.

## Claims

1. A deburring tool comprising a shaft,
the shaft comprising a distal end surface orthogonal to an axis when visually observed, an annular connecting surface extending to a proximal end side from an outer peripheral end of the distal end surface toward an outer peripheral side, an annular outer peripheral surface extending parallel to the axis from an end on the proximal end side of the connecting surface, and a notch disposed at a portion of the shaft in a circumferential direction around the axis and opening to the distal end surface, the connecting surface, and the outer peripheral surface,
the notch having an inner wall surface comprising a pair of opposed surface portions opposed to each other in the circumferential direction,
each of the opposed surface portions extending in a radial direction,
each of the opposed surface portions having an outer peripheral edge having a distal end edge portion continuous to the distal end surface in the circumferential direction, an outer peripheral end edge portion continuous to the outer peripheral surface in the circumferential direction, and a connecting end edge portion continuous to the connecting surface in the circumferential direction and connecting the distal end edge portion and the outer peripheral end edge portion,
the distal end edge portion, the outer peripheral end edge portion, and the connecting end edge portion forming a cutting edge.

2. The deburring tool according to claim 1, wherein the connecting end edge portion is curved to the proximal end side from an end on the outer peripheral side of the distal end edge portion toward the outer peripheral side and continuous to an end on a distal end side of the outer peripheral end edge portion.

3. The deburring tool according to claim 1 or 2, wherein
the inner wall surface of the notch has a connecting surface portion extending in the circumferential direction and in an axial direction along the axis and connecting end edges on an inner peripheral side of a pair of the opposed surface portions, and
the distal end surface is continuous on the inner peripheral side of a distal end edge of the connecting surface portion.

4. The deburring tool according to any one of claims 1 to 3, wherein the shaft has a plurality of the notches at equal angular intervals.

5. The deburring tool according to claim 4, wherein
the plurality of notches of the shaft comprises four notches,
a width dimension in the circumferential direction of a blade section located between two of the notches adjacent to each other in the circumferential direction is 1/3 or more of a radius of the shaft, and
an opening width in the circumferential direction of an outer peripheral-side opening in which each of the notches opens to the outer peripheral surface is 2/3 or more of the radius of the shaft.

6. The deburring tool according to claim 1, wherein a length dimension in the axial direction of the notch is equal to or larger than a radius of the shaft.

7. The deburring tool according to claim 3, wherein the shaft has a through hole passing through a center of the shaft in the axial direction and opening to the distal end surface.

8. The deburring tool according to claim 1, wherein the distal end surface is orthogonal to the axis.

9. The deburring tool according to claim 8, wherein
the distal end surface has a center portion with a protrusion having a shape that tapers toward a distal end side, and
a distance in the axial direction between a distal end point located on a most distal end side in the protrusion and the outer peripheral end of the distal end surface is 50 um or less.

10. The deburring tool according to claim 1, wherein
the distal end surface has a shape that tapers to a distal end side toward the axis, and
a distance in the axial direction between a distal end point located on a most distal end side in the distal end surface and the outer peripheral end of the distal end surface is 50 um or less.

11. A deburring method comprising:
attaching the deburring tool according to claim 1 to a machine tool via a floating holder; and
while rotating the deburring tool around the axis, bringing the distal end surface into contact with a surface to be deburred of a workpiece and moving the distal end surface along the surface to be deburred to remove a burr on the surface to be deburred.
